# EUROPEAN PATENT SPECIFICATION

(11) **EP 3 312 222 B1**
(45) Date of publication and mention of the grant of the patent: **15.02.2023**
(21) Application number: 17191408.8
(22) Date of filing: 19.07.2013
(51) Int. Cl.: C08J 9/04, C08J 9/06, B29C 44/50, C08K 5/02, C08L 25/06

(54) **BLOWING AGENTS FOR EXTRUDED POLYSTYRENE FOAM AND EXTRUDED POLYSTYRENE FOAM**
BLASMITTEL FÜR EXTRUDIERTEN POLYSTYROLSCHAUMSTOFF UND EXTRUDIERTER POLYSTYROLSCHAUMSTOFF
AGENTS GONFLANTS POUR MOUSSE DE POLYSTYRÈNE EXTRUDÉE ET MOUSSE DE POLYSTYRÈNE EXTRUDÉE

(30) Priority: 19.07.2012 US 201261673603 P; 11.09.2012 US 201261699556 P; 15.03.2013 US 201361801980 P
(43) Date of publication of application: 25.04.2018
(62) Divisional of application: 13819975.7
(73) Proprietor: Honeywell International Inc., Morris Plains, NJ 07950 (US)
(72) Inventor: BOWMAN, James M., Illinois 60134 (US); WILLIAMS, David J., New York 14051 (US)
(74) Representative: Stepney, Gregory John

(56) References cited:
- WO-A2-2007/109748
- US-A1- 2009 305 876
- US-A1- 2010 105 789
- US-A1- 2012 128 964

## Description

### FIELD OF THE INVENTION

This invention relates to foamable compositions and closed cell foams obtained from said foamable compositions, as defined in the claims.

### BACKGROUND

Fluorocarbon based fluids have found widespread use in many commercial and industrial applications, including as aerosol propellants and as blowing agents. Because of certain suspected environmental problems, including the relatively high global warming potentials, associated with the use of some of the compositions that have heretofore been used in these applications, it has become increasingly desirable to use fluids having low or even zero ozone depletion potential, such as hydrofluorocarbons ("HFCs"). Thus, the use of fluids that do not contain substantial amounts of chlorofluorocarbons ("CFCs") or hydrochlorofluorocarbons ("HCFCs") is desirable. Furthermore, some HFC fluids may have relatively high global warming potentials associated therewith, and it is desirable to use hydrofluorocarbon or other fluorinated fluids having as low global warming potentials as possible while maintaining the desired performance in use properties.

As suggested above, concern has been increasing in recent years about potential damage to the earth's atmosphere and climate, and certain chlorine-based compounds have been identified as particularly problematic in this regard. The use of chlorine-containing compositions (such as chlorofluorocarbons (CFC's), hydrochlorofluorocarbons (HCF's) and the like) in many applications has become disfavored because of the ozone-depleting properties associated with many of such compounds. There has thus been an increasing need for new fluorocarbon and hydrofluorocarbon compounds and compositions that are attractive alternatives to the compositions heretofore used in these and other applications. For example, it has become desirable to retrofit chlorine-containing systems, such as blowing agent systems or refrigeration systems, by replacing chlorine-containing compounds with non-chlorine-containing compounds that will not deplete the ozone layer, such as hydrofluorocarbons (HFC's). Industry in general is continually seeking new fluorocarbon based mixtures that offer alternatives to, and are considered environmentally safer substitutes for, CFCs and HCFCs. It is considered important in many cases, however, that any potential substitute must also possess those properties present in many of the most widely used fluids, such as imparting excellent thermal insulating properties and other desirable foam characteristics when used as blowing agents, such as appropriate chemical stability, low- or no- toxicity, low or no-flammability, among others.

Furthermore, it is generally considered desirably for CFC blowing agent substitutes to be effective without major engineering changes to conventional foam generating systems.

Methods and compositions for making conventional foamed materials, such as for example thermoplastic materials, have long been known. These methods and compositions have typically utilized chemical and/or physical blowing agents to form the foamed structure in a polymeric matrix. Such blowing agents have included, for example, azo compounds, various volatile organic compounds (VOCs) and chlorofluorocarbons (CFCs). The chemical blowing agents typically undergo some form of chemical change, including chemical reaction with the material that forms the polymer matrix (usually at a predetermined temperature/pressure) that causes the release of a gas, such as nitrogen, carbon dioxide, or carbon monoxide. One of the most frequently used chemical blowing agents is water. The physical blowing agents typically are dissolved in the polymer or polymer precursor material and then expand volumetrically (again at a predetermined temperature/pressure) to contribute to the formation of the foamed structure. Physical blowing agents are frequently used in connection with thermoplastic foams, although chemical blowing agents can be used in place of or in addition to physical blowing agents in connection with thermoplastic foam. For example, it is known to use chemical blowing agents in connection with the formation of polyvinylchloride-based foams. Of course, it is possible that certain compounds and the compositions that contain them may at once constitute a chemical and a physical blowing agent.

On known class of blowing agents is the non-chlorinated, partially hydrogenated fluorocarbons (called "HFCs"). Certain of the HFCs currently being used as blowing agents have at least one potentially serious problem, namely that they generally have relatively high intrinsic thermal conductivity properties (i.e., poor thermal insulation). On the other hand, foams made with certain of the more modern HFC blowing agents, such as CF₃CH₂CF₂H ("HFC-245fa") offer improved thermal insulation, due in part to the low thermal conductivity of HFC-245fa vapor, and due in part to the fine cell structure HFC-245fa imparts to the foams. Even the more modern HFCs, such as HFC-245fa, HFC-134a, HFC-365mfc, and others, exhibit a higher than desirable global warming potential, albeit low relative to other HFCs. Thus, the use of HFCs as blowing agents in foam insulation, particularly rigid foam insulation, has resulted in HFCs being less desirable candidates for blowing agents in commercial foam insulation.

Hydrocarbon blowing agents are also known. For example, U.S. Pat. No. 5,182,309 to Hutzen teaches the use of iso- and normal-pentane in various emulsion mixtures. Another example of hydrocarbon blowing agents is cyclopentane, as taught by U.S. Pat. No. 5,096,933 to Volkert. Although many hydrocarbon blowing agents, such as cyclopentane, and isomers of pentane, are zero ozone depleting agents and exhibit very low global warming potential, such material are less than fully desirable because foams produced from these blowing agents lack the same degree of thermal insulation efficiency as foams made with, for example, HFC-245fa blowing agent. Further, the hydrocarbon blowing agents are extremely flammable, which is undesirable. Also, certain hydrocarbon blowing agents have inadequate miscibility in certain situations with material from which the foam is formed, such as many of the polyester polyols commonly used in polyisocyanurate modified polyurethane foam. The use of these alkanes frequently requires a chemical surfactant to obtain a suitable mixture.

There has thus been an increasing need for new compounds and compositions that are attractive alternatives to the compositions heretofore used as blowing agents in these and other applications. Applicants have thus recognized a need for new fluorocarbon based compounds and compositions that offer effective alternatives to, and are considered environmentally safer substitutes for, CFCs and HCFCs. It is generally considered highly desirable, however, that any potential substitute must also possess properties, or impart properties to the foam, that are at least comparable to those associated with many of the most widely used blowing agents, such as vapor phase thermal conductivity (low k-factor), low- or no-toxicity, among others.

One such potentially important property in many applications is flammability. That is, it is considered either important or essential in many applications, including particularly in blowing agent applications, to use compositions which are of low flammability or are non-flammable. As used herein, the term "nonflammable" refers to compounds or compositions which are determined to be nonflammable as determined in accordance with ASTM standard E-681, dated 2002. Unfortunately, many HFC's which might otherwise be desirable for used in foam blowing agent compositions are not nonflammable. For example, the fluoroalkane difluoroethane (HFC-152a) and the fluoroalkene 1,1,1-trifluoropropene (HFO-1243zf) are each flammable and therefore not viable for use in many applications.

The use of halogenated olefin blowing agents, including hydrofluoroolefins (HFOs) and hydrochlorofluooolefins (HCFOs), is also known, as disclosed for example in US 2009/0305876. The '876 publication describes the use of blowing agent compositions comprising at once both an HFO component and a HCFO component. Specifically identified as advantageous are combinations of HFO-1234 and/or HCFO-1233. For example, the sixth entry in the Table on page 13 of the '876 publication discloses blowing agent compositions comprising both HCFO1233zd and trans-HFO-1234ze, with the amount of trans-HFO-1234ze being identified as ranging from 1 to 99% by weight and from about 1 to about 20% and from about 80% to about 99%. The use of the compositions of the '876 patent to make thermoplastic foams is also disclosed. US publication 2012/0128964 discloses azeotrope-like mixtures of trans-HFO-1234ze and trans-HCFO-1233zd.

US Publication 2010/0105789 also discloses the possibility of using a blowing agent for thermoplastic foams that comprises both an HFO and an HCFO. The disclosure indicates that the HFO may include,by is not limited to 3,3,3-trifluoropropene (HFO-1243zf), 1,2,3,3,3-pentafluoropropene (HFO-1225ye), cis- and/or trans-1,3,3,3-tetrafluoropropene (HFO-1234ze), and 2,3,3,3-tetrafluoropropene (HFO 1234yf), and mixtures thereof. The disclosure indicates that the HCFO is (cis and/or trans)-1-chloro-3,3,3-trifluoropropene (HCFO-1233zd), particularly the trans isomer, 2-chloro-3,3,3-trifluoropropene (HCFO-1233xf), 1,1-dicloro-3,3,3-trifluoropropene, 1,2-dichloro-3,3,3-trifluoropropene, and mixtures thereof. The '789 publication discloses and exemplifies only two combinations, namely, (1) HFO-1243zf and HCFO-1233zd. and (2) HFO-1234yf and HCFO-1233zd. With one exception, all of the combinations proposed by the '789 publication produce thermoplastic foams having a density greater than 50 kg/m³, and the one combination that achieves a density below 50 kg/m³ utilizes 4% by weight of HFO-1243zf, which is known to have certain undesirable properties, including undesirable flammability properties as mentioned above.

Notwithstanding the disclosures in each of the '876 publication and the '789 publication, applicants have come to appreciate that an unexpected advantage can be achieved in connection with the formation of extruded thermoplastic foams, and in particular extruded polystyrene foams, by combining for use in the blowing agent trans-HFO-1234ze and trans-HCFO-1233zd according to specific limitations, as described hereinafter.

### SUMMARY

Applicants have found that unexpected advantages can be achieved with respect to extruded polystyrene (XPS) foams when foamable compositions are formed to comprise: (a) foamable resin, particularly and preferably comprising and in certain preferred embodiments consisting essentially of, foamable polystyrene; and (b) a blowing agent comprising (i) transHFO-1234ze in an amount greater than 3% by weight to less than 8% by weight of the foamable composition; and (ii) greater than 3% by weight of trans-1,1,1-trifluoro-3-chloropropene (transHCFO-1233zd) in the foamable composition, provided that concentration of component (i) and (ii) together in the foamable composition is not greater than 15% of the foamable composition, and even more preferably not greater than 12% by weight of the foamable composition. The amount of trans-HFO-1234ze is preferably greater than 4% by weight and not greater than 7 wt%, and even more preferably not greater than 6% by weight, of the foamable composition. It is preferred that the total blowing agent in the composition, including any co-blowing agent components in addition to HFO-1234ze and HFO-1233zd, is not greater than 15% of the foamable composition, more preferably not greater than 12% by weight of the foamable composition and even more preferably not greater than 10% by weight of the foamable composition.

The foamable compositions allow the skilled person to obtain closed-cell foams as defined in the claims. To aid the full understanding of the skilled person, also disclosed herein are foams and methods of making thermoplastic, thermal insulating foams, and even more particularly thermal insulating XPS foam. The applicants have found that closed-cell foams with advantageous thermal insulating properties and advantageously low density can be formed using blowing agent compositions formed from foamable compositions that comprise: (a) foamable resin, particularly and preferably comprising foamable polystyrene and in certain embodiments consisting essentially of foamably polystyrene; and (b) a blowing agent comprising (i) transHFO-1234ze in an amount not less than 3% by weight but not greater than 6% by weight of the foamable composition; and (ii) transHCFO-1233zd in an amount not less than 3% by weight and not greater than 10%, provided that concentration of component (i) and (ii) together in the foamable composition is not less than 8% by weight and not greater than 14% of the foamable composition, and even more preferably not greater than 12% by weight of the foamable composition. The low density thermoplastic foams disclosed herein have a density of not greater than 50 Kg/m³, more preferably not greater than about 40 Kg/m³, and at the same time has a thermal conductivity of not greater than 25 mW/m-K, more preferably not greater than about 25 mW/m-K, and even more preferably not greater than about 20 mW/m-K.

In certain preferred embodiments the concentration of HFO-1234ze is the same as or greater than the concentration of HCFO-1233zd in the composition.

### DETAILED DESCRIPTION OF PREFERRED EMBODIMENTS

Applicants believe that, in general, composition which meet the requirements of having components (i) and (ii) as specified herein are generally effective and exhibit utility in blowing agent compositions, and in particular blowing agents for extruded thermoplastic foam and in thermoplastic extrusion processes, and even more preferably wherein the thermoplastic is XPS, in accordance with the teachings contained herein. The advantageous properties of the blowing agent compositions and the the XPS foams formed therefrom include in preferred embodiments: high thermal insulating performance (low K factors); low level of toxicity; high levels of environmental friendliness (including low GWP, no ODP effect, non-VOC); low or no flammability; high degree of solubility in the thermoplastic, particularly poly styrene; high level of processability (for example, as measured by gas laden melting rheology) to form foams having structures and properties that are highly advantageous.

As mentioned above, the present disclosure provides methods of forming extruded polystyrene foams using a blowing agent in which the amount of transHFO-1234ze is greater than about 3% by weight but less than about 8% by weight of the foamable composition, while simultaneously requiring that the amount of total blowing agent in the foamable composition is greater than about 6% by weight and not greater than about 15% by weight of the foamable composition. Applicants acknowledge that it is possible to carry out methods of producing extruded thermoplastic foams in general, and XPS foams in particular, using blowing agents that contain HFO-1234ze outside of such concentration ranges and/or total blowing agent concentrations outside of these ranges. However, and without being bound by or to any particular theory of operation, applicants have found that unexpected advantages can be achieved by the synergistic interaction of components (i) and (ii) when present in the amounts required by the present invention, and that this interaction produces processing advantages and/or other advantages in connection with the formation of low density extruded polystyrene foams. As explained more fully hereinafter, the present inventors have found that the ability to achieve a low density foam, and in particular low density foam having a density of less than about 45 kg/m³ and even more preferably less than about 40 kg/m³, having an advantageous average cell size and/or excellent heat transfer properties is enhanced by selecting a blowing agent comprising components (i) and (ii) within the concentration ranges described herein. While it is possible to obtain a low density foam using trans-HFO-1234ze alone, applicants have found that an enhancement in overall foam properties and/or processing advantages can be unexpectedly achieved by using the instant blowing composition. The use of blowing agent composition in accordance with the present invention results in the ability to form, in a stable extrusion process using an environmentally friendly blowing agent, a foam that is at once: (1) low density (as defined hereafter); (2) has a favorable cell size; and (3) has excellent thermal insulating performance.

One unexpected advantage of the present invention is the ability of the inventive compositions to achieve low density polystyrene foam having at the same time having excellent thermal conductivity, particularly and preferably when used as in standard extrusion equipment and under conditions commonly used with the use of prior blowing agents, such as HFC-134a, HFC-152a, and HFC-245fa. As used herein, the term low density means foams having a density of not greater than about 50 Kg/m³. In certain embodiments the methods produce foams having a density of from about 30 to less than about 45 Kg/m³, and even more preferably from about 30 to less than about 40 Kg/m³,

In certain preferred forms, blowing agent compositions of the present invention have a Global Warming Potential (GWP) of not greater than 1000, more preferably not greater than 500, and even more preferably not greater than 150. In certain embodiments, the GWP of the present compositions is not greater than 100 and even more preferably not greater than 75. As used herein, "GWP" is measured relative to that of carbon dioxide and over a 100 year time horizon, as defined in "The Scientific Assessment of Ozone Depletion, 2002, a report of the World Meteorological Association's Global Ozone Research and Monitoring Project."

In certain preferred forms, the present compositions also preferably have an Ozone Depletion Potential (ODP) of not greater than 0.05, more preferably not greater than 0.02 and even more preferably zero. As used herein, "ODP" is as defined in "The Scientific Assessment of Ozone Depletion, 2002, A report of the World Meteorological Association's Global Ozone Research and Monitoring Project,".

### CO-BLOWING AGENTS

As mentioned above, one aspect of preferred embodiments of the present invention is the requirement of at least 3% by weight of transHCFO-1233zdto act as a co-blowing agent

Other co-blowing agents may also be included, depending upon the particular application being pursued, provided such addition does not have a substantial negatively effect on the preferred performance parameters described herein. The other co-blowing agent in accordance with the present invention can comprise a physical blowing agent, a chemical blowing agent or a co-blowing agent having a combination of physical and chemical blowing agent properties. Such other co-blowing agents may include but are not limited to: one or more haloalkenes other than transHFO-1234ze and transHCFO-1233zd, including cisHFO-1234ze and cisHCFO-1233zd; hydrocarbons; hydrofluorocarbons (HFCs); ethers; alcohols; aldehydes; ketones; methyl formate; formic acid; water; trans-1 ,2-dichloroethylene; carbon dioxide and combinations of any two or more of these. Examples of such possible co-blowing agents are described in US Patent 8,420,706, which is owned by the owner of the present application. According to certain preferred embodiments, the other co-blowing agent comprises one or more of: one or more alcohols, preferably one or more C1-C4 alcohols, and even more preferably, methanol, ethanol, propanol and isopropanol, with ethanol being preferred for certain embodiments; HFC-152a; dimethyl ether; acetone; one or more hydrocarbons, preferably C1 - C4 hydrocarbons, and even more preferably C4 hydrocarbons, with isobutene being preferred for certain embodiments; CO₂; and water.

### OTHER COMPONENTS

Other optional additional components/compounds which may be included according to the particular need or requirement of use include, but are not limited to, surfactants, polymer modifiers, toughening agents, colorants, dyes, solubility enhancers, rheology modifiers, plasticizing agents, flammability suppressants, antimicrobial agents, viscosity reduction modifiers, fillers, vapor pressure modifiers, nucleating agents, catalysts and the like. In certain preferred embodiments, dispersing agents, cell stabilizers and other additives may also be incorporated into the blowing agent compositions of the present invention. Certain surfactants are optionally but preferably added to serve as cell stabilizers. Some representative materials are sold under the names of DC-193, B-8404, and L-5340 which are, generally, polysiloxane polyoxyalkylene block co-polymers such as those disclosed in U.S. Patent Nos. 2,834,748, 2,917,480, and 2,846,458. Other optional additives for the blowing agent mixture may include flame retardants such as tri(2-chloroethyl)phosphate, tri(2-chloropropyl)phosphate, tri(2,3-dibromopropyl)-phosphate, tri(1 ,3-dichloropropyl) phosphate, diammonium phosphate, various halogenated aromatic compounds, antimony oxide, aluminum trihydrate, polyvinyl chloride, and the like.

With respect to nucleating agents, all known compounds and materials having nucleating functionality are available for use in the present invention, including particularly talc. In certain highly preferred embodiments, a nucleating agent, and particularly talc, is included in the foamable composition, preferably in amounts up to about 1%.

Of course other compounds and/or components that modulate a particular property of the compositions (such as cost for example) may also be included in the present compositions, and the presence of all such compounds and components is within the scope of the invention.

The foamable compositions also include a thermoplastic foam forming agent, that is, a one or more components capable of forming extruded polystyrene (XPS) foam. As used herein, the term "foam foaming agent" is used to refer to a component, or a combination on components, which are capable of forming an XPS foam structure, preferably a generally cellular foam XPS structure with the blowing agent contained in a plurality of the closed cells and preferably in substantially all of the closed cells. The foamable compositions of the present invention include foamable polystyrene and a blowing agent in accordance with the present invention

In the present invention, the one or more components capable of foaming comprise thermoplastic materials based upon or containing in major proportion thermoplastic styrene polymers and/or resins.

### METHODS AND SYSTEMS

It is contemplated that all presently known and available methods and systems for forming foam, and in particular XPS foam, are readily adaptable for use in connection with the present invention. For example, the methods disclosed herein generally require incorporating a blowing agent in accordance with the present invention into a foamable or foam forming composition and then foaming the composition, preferably by a step or series of steps which include causing volumetric expansion of the blowing agent in accordance with the present invention. In general, it is contemplated that the presently used systems and devices for incorporation of blowing agent and for foaming are readily adaptable for use in accordance with the present invention. In fact, it is believed that one advantage of the present invention is the provision of an improved blowing agent which is generally compatible with and produces advantageous and unexpected results with respect to existing foaming methods and systems, and particularly extrusion methods of forming thermoplastic foams, including preferably XPS.

Thus, disclosed herein is the use of the present blowing agents in connection conventional foaming equipment, such as polystyrene foaming extrusion equipment, at conventional processing conditions. The present methods therefore include masterbatch type operations, blending type operations, third stream blowing agent addition, and blowing agent addition at the foam head.

With respect to thermoplastic foams, the preferred methods generally comprise introducing a blowing agent in accordance with the present invention into a thermoplastic material, preferably polystyrene ("PS") and then subjecting the PS to conditions effective to cause foaming. For example, the step of introducing the blowing agent into the thermoplastic material may comprise introducing the blowing agent into a screw extruder containing the thermoplastic, and the step of causing foaming may comprise lowering the pressure on the thermoplastic material by extrusion through a dye and thereby causing expansion of the blowing agent and contributing to the foaming of the material.

It will be appreciated by those skilled in the art, especially in view of the disclosure contained herein, that the order and manner in which the blowing agent of the present invention is formed and/or added to the foamable composition does not generally affect the operability of the present invention. For example, in the case of extrudable foams, it is possible that the various components of the blowing agent, including particularly components (i) and (ii), and even the other components of the foamable composition, not be mixed in advance of introduction to the extrusion equipment, or even that the components are not added to the same location in the extrusion equipment. Moreover, the blowing agent can be introduced either directly or as part of a premix, which is then further added to other parts of the foamable composition.

Thus, as disclosed herein it may be desired to introduce one or more components of the blowing agent at a first location in the extruder, which is upstream of the place of addition of one or more other components of the blowing agent, with the expectation that the components will come together in the extruder and/or operate more effectively in this manner. Nevertheless, in certain methods disclosed herein, two or more components of the blowing agent are combined in advance and introduced together into the foamable composition, either directly or as part of premix which is then further added to other parts of the foamable composition.

While advantages can be achieved in accordance with the preferred density requirements identified herein, in preferred applications the preferred methods produce low density foam that also exhibits an average cell size that is from about 100 µm to about 1000 µm, more preferably from about 200 to about 500 µm in certain embodiments, and in certain embodiments preferably greater than about 50 to about 200 µm.

Applicants have found that the methods of forming extruded polystyrene disclosed herein have unexpected advantages, including the ability to achieve a low density closed-cell foam having the preferred average cell size in a highly efficient and effective process. More specifically, applicants have found that highly desirable and unexpected advantages can be achieved in connection with methods of extruding thermoplastic foams in general, and polystyrene foams in particular, to produce low density extruded thermoplastic foam, and preferably extruded polystyrene, or XPS foam, by adding to the thermoplastic a blowing agent comprising (i) transHFO-1234ze in an amount of from 3 wt% to less than 8 wt%, and even more preferably not greater than 6 wt% in the foamable composition; and (ii) at least one co-blowing agent comprising transHCFO-1233zd, provided that the total amount of said (i) and (ii) is greater than 8 wt% and not greater than 15 wt% in the foamable composition. For the purposes of convenience, the term "wt% in the foamable composition" is sometimes used herein and refers to the concentration based upon the combined weight of the blowing agent and the foamable thermoplastic.

It is contemplated also that in certain embodiments it may be desirable to utilize the present compositions when in the supercritical or near supercritical state as a blowing agent.

### THE FOAMS

The disclosed herein also relates to closed-cell foams, prepared from a polymer foam formulation containing a blowing agent comprising the compositions of the invention. Applicants have found that one advantage of the foams is the ability to achieve, preferably in connection with thermoplastic embodiments, exceptional thermal performance, which can be measured by the K-factor or lambda, particularly and preferably while maintaining efficient and economical processing conditions.

The closed cell foams disclosed herein, provide one or more exceptional features, characteristics and/or properties, including: thermal insulation efficiency (particularly for thermoset foams), dimensional stability, compressive strength, aging of thermal insulation properties, all in addition to the low ozone depletion potential and low global warming potential associated with many of the preferred blowing agents of the present invention. Certain foams disclosed herein are thermoplastic foam, including such foam formed into foam articles, which exhibit improved thermal conductivity relative to foams made using other blowing agent composition in the same amount overall amount. Certain highly preferred thermoplastic foams, and preferably XPS foams, disclosed herein exhibit a k-factor (mW/m-K) of not greater than about 25, more preferably not greater than about 23 and even more preferably not greater than about 20 measured at 40°F at about 24 hours after production. Preferably the k-factor is measure in accordance with ASTM C518-10. Highly preferred foams disclosed herein achieve the preferred k-factor requirements specified herein while simultaneously having a density not greater than about 50 Kg/m³, more preferably not greater than about 45 Kg/m³, and even more preferably not greater than about 40 Kg/m³.

Other preferred foams disclosed herein exhibit improved mechanical properties relative to foams produced with blowing agents outside the scope of the present invention. For example, certain foams and foam articles disclosed herein have a compressive strength which is superior to, and preferably at least about 10 relative percent, and even more preferably at least about 15 relative percent greater than a foam produced under substantially identical conditions by utilizing a blowing agent consisting of cyclopentane. Furthermore, the foams produced in accordance with the disclosure herein have compressive strengths that are on a commercial basis comparable to the compressive strength produced by making a foam under substantially the same conditions except wherein the blowing agent consists of HFC-245fa. In certain preferred foams disclosed herein exhibit a compressive strength of at least about 12.5% yield (in the parallel and perpendicular directions), and even more preferably at least about 13% yield in each of said directions.

### EXAMPLES

The following examples are provided for the purpose of illustrating the present invention but without limiting the scope thereof.

### EXAMPLES 1 - 8 XPS FOAM FROM TRANS-HFO-1234ZE AND 1233ZD

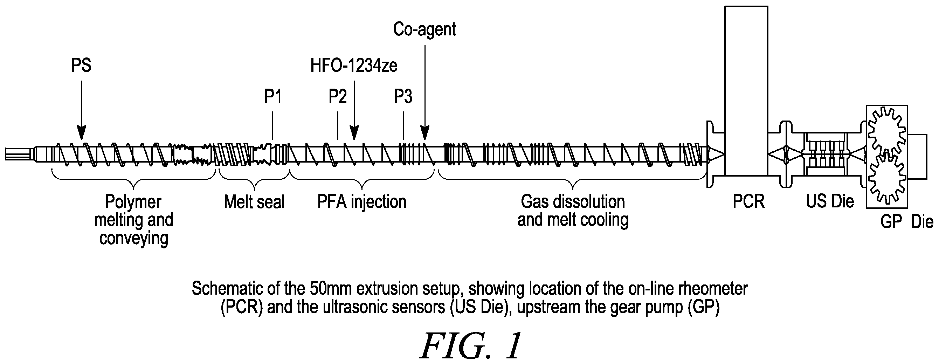

Foam extrusion runs were performed on a 50mm Leistritz counterrotating twin-screw extruder set up for foam processing. A schematic illustration of the extruder is provided in Figure 1. It was operated at a nominal resin feed rate of 20 kg/hr. The screw speed was set to 60 rpm. The blowing agents were injected separately into the extruder using liquid chromatography pumps, with their feed rates adjusted to provide the desired blend composition. Foaming agent concentrations were chosen to produce foams of low density, typically less than 75 kg/m3, optimally close to 40 kg/m3. Loss in weight data were constantly monitored to ensure that nominal and experimental feed rates were as expected. Orifice strand dies having diameters of 2 and 3mm (die land of 1 mm) were used to produce foams with cylindrical shape.

Depending on the level of plasticization achieved for the given PFA content, temperature along the barrel and at the die were lowered toward the 130-140°C range, known to be adequate for low-density close-cell PS foam extrusion.

A 50mm screw extruder was used and included an on-line process control rheometer (PCR-620, formely from Rheometric Scientific, now available from Thermo Scientific) and an in-line ultrasonic sensor. A gear pump located at the end of the line was used to control the melt pressure in the system. Viscosity measurements and degassing pressure determination were conducted for 13 different formulations based on 1234ze(E) as the main foaming agent and various concentrations of the other co-agents. Depending on level of plasticization reached, measurements were taken at 120, 140, 160 and/or 180°C. The PCR used for the on-line viscosity measurement enabled stress sweeps to be performed according to the volumetric flow rate limitation of the instrument and the sensitivity of the pressure transducers. This yields a shear stress range of 10 to 60 kPa, corresponding to apparent shear rates ranging between 0.1 and 100s-1. Measurements were obtained typically at nine different stress levels. Pressure was set in the slit to a minimum of 5.0 MPa in order to maintain the PFAs dissolved and avoid a premature phase separation in the rheometer. Corrections were further applied to the viscosity results to account for temperature variation. Extent of plasticization was further deduced from these measurements and was further translated into a decrease of the glass transition temperature of polystyrene.

A set of ultrasonic sensors was used to detect the occurrence of bubbles when a phase separation was purposely induced. An instrumented slit die (5 mm thick by 4 cm wide and 20 cm long) was mounted between the end of the extruder and the gear pump entrance. This die was equipped with two identical ultrasonic probes installed at midstream and perpendicular to the slit, so that the ultrasonic beam was normal to the flow channel. Three pressure transducers were also mounted to measure the pressure profile across the die, enabling the extrapolation of the pressure at the ultrasound detector location. Gradually increasing the gear pump speed reduces the pressure inside the slit die down to the said degassing pressure (taken here as an estimator of the equilibrium solubility pressure), where a sharp increase of the ultrasonic signal attenuation is taken as an indication of phase separation.

Various concentrations of blowing agent in accordance with preferred aspects of the invention were tested, identified by Examples 1 - 8 below and produced the results reported in Table 1 below:

**Table 1**

| **Ex** | **Wt% t1234ze** | **Wt% t1233zd** | **Wt % Talc** | **Cell Size, µm** | **Density, kg/m³** | **K mW/ m-K** | **Tₘₑₗₜ °C** | **Foam Condition** |
|---|---|---|---|---|---|---|---|---|
| 1 | 4 | 4 | 0.5 | 100 - 150 | 48 | 27.6 | 130 | Few blow holes |
| 2 | 4 | 6 | 0.5 | 80 - 100 | 47 | 22.3 | 130 | nice foam |
| 3 | 4 | 6 | 0 | 200 | 45 | Na | 130 | Nice foam |
| 4 | 4 | 8 | 0.5 | 80 - 100 | 40 | 18.1 | 125 | Nice foam with some minor surface defects |
| 5 | 4 | 8 | 0.5 | 60-100 | 41 | 19.8 | 120 | Nice foam with some minor surface defects |
| 6 | 4 | 10 | 0.5 | 60-100 | 38 | 17.5 | 120 | Surface defects |
| 7 | 6 | 4 | 0.5 | 60 - 100 | 46 | 19.2 | 130 | Surface defects |
| 8 | 6 | 4 | 0 | 100-200 | 50 | Na | 130 | Very nice foam |

As can be seen from the above, excellent results are achieved in accordance with the present invention by extruding foamable XPS compositions in which the blowing agent comprises from about 4 to about 6 wt % of transHFO-1234ze and from about 4 to about 10 wt% of transHCFO-1233zd to produce high quality, low density foams with average cell sizes ranging from 60 to 200 and good thermal conductivity. It is also shown that with all other parameters being unchanged, the thermal conductivity of the foam is greater than the desired 25 m-W/m-K for the composition of Example 1, in which the total blowing agent concentration is not greater than 8%. For all other examples in which the blowing agent concentration is greater than 8% by weight, the thermal conductivity is less than about 22 m-W/m-k, and even more preferably for examples 4 - 7 and 9 less than about 20 m-W/m-K.

### COMPARATIVE EXAMPLES C1 -XPS FOAM

The formation of a foam using the equipment and procedures of Examples 1 - 8 is repeated, except the blowing agent consists of 6 wt% of transHFO-1234ze as indicated in Table C1 below:

**Table C1**

| **Ex.** | **Wt% t1234ze** | **Wt% Talc** | **Cell Size, µm** | **Density, kg/m³** | **K mW/ m-K** | **Tₘₑₗₜ °C** | **Comment** |
|---|---|---|---|---|---|---|---|
| C1 | 6 | 0.5 | 100-150 | 61 | 20.9 | 140 | Blow holes |
| C1' | 6 | 0 | 300 -600 | 77 | Na | 140 | Blow holes (fewer than C1) |

As can be seen from Table C1 above, the use of trans-HFO-1234ze alone in an amount of greater than about 4 wt% of the foamable composition, and using the extrusion conditions of Examples 1 - 8, does not result in a low density foam.

### COMPARATIVE EXAMPLES C2 - XPS FOAM

The formation of a foam using the equipment and procedures of Examples 1 - 8 is repeated, except the amount of transHCFO-1233zd is decreased from 4 wt% to 2 wt% of the foamable composition. The results are as reported in Table C2 below:

**Table C2**

| **Ex .** | **Wt % t1234ze** | **Wt% t1233zd** | **Wt% Talc** | **Cell Size, µm** | **Density, kg/m³** | **K mW/ m-K** | **Tₘₑₗₜ °C** | **Comment** |
|---|---|---|---|---|---|---|---|---|
| C2 | 6 | 2 | 0.5 | 100 | 65 | 25.5 | 130 | Few blow holes |

As can be seen from Table C2 above, the use of a combination of trans-HFO-1234ze and HFO-1233zd wherein the amount of HFO-1233zd is below about 3% does not produce a low density foam or a foam with a k-factor less than about 25m-W/m-K under the extrusion conditions of Examples 1 - 8.

### EXAMPLE 9 - XPS FOAM FROM TRANSHFO-1234ZE,TRANS1233ZD AND ETHANOL

The formation of a foam using the equipment and procedures of Examples 1 - 8 is repeated, except the blowing agent used is modified to include 2 wt% of ethanol as indicated in Table 3 below, and the results are as indicated:

**Table 3**

| **Wt % t1234ze** | **Wt% t1233zd** | **Wt% Ethanol** | **Wt % Talc** | **Cell Size, µm** | **Density, kg/m³** | **K mW/ m-K** | **Tₘₑₗₜ °C** | **Foam Condition** |
|---|---|---|---|---|---|---|---|---|
| 6 | 4 | 2 | 0.5 | 60 | 37 | 20.3 | 120 | Surface defects |

As can be seen from the above results, a low density XPS foam is produced with average cell size of about 60 and good thermal conductivity.

## Claims

1. A foamable composition comprising a) foamable resin, comprising foamable polystyrene; and (b) a blowing agent comprising (i) transHFO-1234ze in an amount greater than 3% by weight to less than 8% by weight of the foamable composition; and (ii) greater than 3% by weight of trans-1,1,1-trifluoro-3-chloropropene (transHCFO-1233zd) in the foamable composition, provided that concentration of component (i) and (ii) together in the foamable composition is not greater than 15% of the foamable composition.

2. The foamable composition of claim 1 wherein the concentration of component (i) and (ii) is not greater than 12% by weight of the foamable composition.

3. The foamable composition of any one of claims 1 to 2 wherein the amount of trans-HFO-1234ze is greater than 4% by weight and not greater than 7 wt%, and even more preferably not greater than 6% by weight, of the foamable composition.

4. The foamable composition of any one of claims 1 to 3 wherein the total blowing agent in the composition, including any co-blowing agent components in addition to HFO-1234ze and HFO-1233zd, is not greater than 15% of the foamable composition, more preferably not greater than 12% by weight of the foamable composition and even more preferably not greater than 10% by weight of the foamable composition.

5. A foamable composition comprising: (a) foamable resin, comprising foamable polystyrene and (b) a blowing agent comprising (i) transHFO-1234ze in an amount not less than 3% by weight but not greater than 6% by weight of the foamable composition; and (ii) transHCFO-1233zd in an amount not less than 3% by weight and not greater than 10%, provided that concentration of component (i) and (ii) together in the foamable composition is not less than 8% by weight and not greater than 14% of the foamable composition, and even more preferably not greater than 12% by weight of the foamable composition.

6. The foamable composition of any one of claims 1 to 5 wherein the foamable resin consists essentially of foamable polystyrene.

7. The foamable composition of any one of claims 1 to 6 wherein the concentration of HFO-1234ze is the same as or greater than the concentration of HCFO-1233zd in the composition.

8. The foamable composition of any one of claims 1 to 7 wherein the blowing agent has a Global Warming Potential (GWP) of not greater than 1000, more preferably not greater than 500, and even more preferably not greater than 150, not greater than 100 and even more preferably not greater than 75.

9. The foamable composition of any one of claims 1 to 8 wherein the blowing agent has an Ozone Depletion Potential (ODP) of not greater than 0.05, more preferably not greater than 0.02 and even more preferably zero.

10. The foamable composition of any one of claims 1 to 9, wherein the blowing agent further comprises one or more haloalkenes other than transHFO-1234ze and transHCFO-1233zd, including cisHFO-1234ze and cisHCFO-1233zd; hydrocarbons; hydrofluorocarbons (HFCs); ethers; alcohols; aldehydes; ketones; methyl formate; formic acid; water; trans-1,2-dichloroethylene; carbon dioxide and combinations of any two or more of these, preferably, wherein the blowing agent further comprises one or more alcohols, preferably one or more C1-C4 alcohols, and even more preferably, methanol, ethanol, propanol and isopropanol, most preferably ethanol; HFC-152a; dimethyl ether; acetone; one or more hydrocarbons, preferably C1 - C4 hydrocarbons, and even more preferably C4 hydrocarbons, most preferably isobutene being preferred for certain embodiments; CO2; and water.

11. A closed cell foam foam obtained from the foamable composition of any preceding claim.

12. The foam of claim 11, wherein the foam is an extruded polystyrene foam.

13. The foam of claim 11 or claim 12, wherein the foam has a k-factor (mW/m-K) of not greater than 25, preferably not greater than 23, more preferably not greater than about 20, when measured at 4°C (40°F) at 24 hours after production, wherein the k-factor is measured according to ASTM C518-10.

14. The foam of claim 13, wherein the foam has a density not greater than 50 Kg/m³, preferably not greater than 45 Kg/m³, more preferably not greater than 40 Kg/m³.

## Patentansprüche

1. Schäumbare Zusammensetzung, umfassend a) schäumbares Harz, umfassend schäumbares Polystyrol; und (b) ein Treibmittel, umfassend (i) transHFO-1234ze in einer Menge von mehr als 3 Gew.-% bis weniger als 8 Gew.-% der schäumbaren Zusammensetzung; und (ii) mehr als 3 Gew.-% trans-1,1,1-Trifluor-3-chlorpropen (transHCFO-1233zd) in der schäumbaren Zusammensetzung, mit der Maßgabe, dass die Konzentration der Komponente (i) und (ii) zusammen in der schäumbaren Zusammensetzung nicht mehr als 15 % der schäumbaren Zusammensetzung beträgt.

2. Schäumbare Zusammensetzung nach Anspruch 1, wobei die Konzentration der Komponenten (i) und (ii) nicht mehr als 12 Gew.-% der schäumbaren Zusammensetzung beträgt.

3. Schäumbare Zusammensetzung nach einem der Ansprüche 1 bis 2, wobei die Menge an trans-HFO-1234ze mehr als 4 Gew.-% und nicht mehr als 7 Gew.-%, und noch bevorzugter nicht mehr als 6 Gew.-%, der schäumbaren Zusammensetzung beträgt.

4. Schäumbare Zusammensetzung nach einem der Ansprüche 1 bis 3, wobei das gesamte Treibmittel in der Zusammensetzung, einschließlich jeglicher Co-Treibmittelkomponenten zusätzlich zu HFO-1234ze und HFO-1233zd, nicht mehr als 15 % der schäumbaren Zusammensetzung, bevorzugter nicht mehr als 12 Gew.-% der schäumbaren Zusammensetzung und noch bevorzugter nicht mehr als 10 Gew.-% der schäumbaren Zusammensetzung beträgt.

5. Schäumbare Zusammensetzung, umfassend: (a) schäumbares Harz, umfassend schäumbares Polystyrol und (b) ein Treibmittel, umfassend (i) transHFO-1234ze in einer Menge von nicht weniger als 3 Gew.-%, aber nicht mehr als 6 Gew.-% der schäumbaren Zusammensetzung; und (ii) transHCFO-1233zd in einer Menge von nicht weniger als 3 Gew.-% und nicht mehr als 10 %, mit der Maßgabe, dass die Konzentration der Komponente (i) und (ii) zusammen in der schäumbaren Zusammensetzung nicht weniger als 8 Gew.-% und nicht mehr als 14 % der schäumbaren Zusammensetzung und noch bevorzugter nicht mehr als 12 Gew.-% der schäumbaren Zusammensetzung beträgt.

6. Schäumbare Zusammensetzung nach einem der Ansprüche 1 bis 5, wobei das schäumbare Harz im Wesentlichen aus schäumbarem Polystyrol besteht.

7. Schäumbare Zusammensetzung nach einem der Ansprüche 1 bis 6, wobei die Konzentration von HFO-1234ze gleich oder größer ist als die Konzentration von HCFO-1233zd in der Zusammensetzung.

8. Schäumbare Zusammensetzung nach einem der Ansprüche 1 bis 7, wobei das Treibmittel ein Treibhauspotential (GWP) von nicht mehr als 1000, bevorzugter nicht mehr als 500 und noch bevorzugter nicht mehr als 150, nicht mehr als 100 und noch bevorzugter nicht mehr als 75 aufweist.

9. Schäumbare Zusammensetzung nach einem der Ansprüche 1 bis 8, wobei das Treibmittel ein Ozonabbaupotenzial (ODP) von nicht mehr als 0,05, bevorzugter nicht mehr als 0,02 und noch bevorzugter null aufweist.

10. Schäumbare Zusammensetzung nach einem der Ansprüche 1 bis 9, wobei das Treibmittel ferner ein oder mehrere andere Halogenalkene als transHFO-1234ze und transHCFO-1233zd, einschließlich cisHFO-1234ze und cisHCFO-1233zd; Kohlenwasserstoffe; Fluorkohlenwasserstoffe (HFCs); Ether; Alkohole; Aldehyde; Ketone; Methylformiat; Ameisensäure; Wasser; trans-1,2-Dichlorethylen; Kohlendioxid und Kombinationen von zwei oder mehreren davon umfasst, vorzugsweise, wobei das Treibmittel ferner einen oder mehrere Alkohole umfasst, vorzugsweise einen oder mehrere C1-C4-Alkohole und noch bevorzugter Methanol, Ethanol, Propanol und Isopropanol, am meisten bevorzugt Ethanol; HFC-152a; Dimethylether; Aceton; ein oder mehrere Kohlenwasserstoffe, vorzugsweise C1-C4-Kohlenwasserstoffe und noch mehr bevorzugt C4-Kohlenwasserstoffe, wobei für bestimmte Ausführungsformen Isobuten am meisten bevorzugt wird; CO2; und Wasser.

11. Geschlossenzelliger Schaumstoff, erhalten aus der schäumbaren Zusammensetzung nach einem der vorhergehenden Ansprüche.

12. Schaumstoff nach Anspruch 11, wobei der Schaumstoff ein extrudierter Polystyrolschaum ist.

13. Schaumstoff nach Anspruch 11 oder Anspruch 12, wobei der Schaumstoff einen k-Faktor (mW/m-K) von nicht mehr als 25, vorzugsweise nicht mehr als 23, besonders bevorzugt nicht mehr als etwa 20 aufweist, gemessen bei 4 °C (40°F) 24 Stunden nach der Herstellung, wobei der k-Faktor gemäß ASTM C518-10 gemessen wird.

14. Schaumstoff nach Anspruch 13, wobei der Schaumstoff eine Dichte von nicht mehr als 50 kg/m³, vorzugsweise nicht mehr als 45 kg/m³, besonders bevorzugt nicht mehr als 40 kg/m³ aufweist.

## Revendications

1. Composition expansible comprenant a) une résine expansible, comprenant du polystyrène expansible ; et (b) un agent gonflant comprenant (i) du transHFO-1234ze en une quantité supérieure à 3 % en poids à moins de 8 % en poids de la composition expansible ; et (ii) plus de 3 % en poids de trans-1,1,1-trifluoro-3-chloropropène (transHCFO-1233zd) dans la composition expansible, à condition que la concentration cumulée des composants (i) et (ii) dans la composition expansible ne soit pas supérieure à 15 % de la composition expansible.

2. Composition expansible selon la revendication 1, dans laquelle la concentration des composants (i) et (ii) n'est pas supérieure à 12 % en poids de la composition expansible.

3. Composition expansible selon l'une quelconque des revendications 1 à 2, dans laquelle la quantité de trans-HFO-1234ze est supérieure à 4 % en poids et non supérieure à 7 % en poids, et de préférence non supérieure à 6 % en poids, de la composition expansible.

4. Composition expansible selon l'une quelconque des revendications 1 à 3, dans laquelle l'agent gonflant total dans la composition, y compris tout composant co-agent gonflant en plus du HFO-1234ze et du HFO-1233zd, ne représente pas plus de 15 % de la composition expansible, de préférence pas plus de 12 % en poids de la composition expansible et mieux encore pas plus de 10 % en poids de la composition expansible.

5. Composition expansible comprenant : (a) une résine expansible, comprenant du polystyrène expansible et (b) un agent gonflant comprenant (i) du transHFO-1234ze en une quantité non inférieure à 3 % en poids mais non supérieure à 6 % en poids de la composition expansible ; et (ii) du transHCFO-1233zd en une quantité non inférieure à 3 % en poids et non supérieure à 10 %, à condition que la concentration cumulée des composants (i) et (ii) dans la composition expansible ne soit pas inférieure à 8 % en poids et pas supérieure à 14 % de la composition expansible, et de préférence pas supérieure à 12 % en poids de la composition expansible.

6. Composition expansible selon l'une quelconque des revendications 1 à 5, dans laquelle la résine expansible est essentiellement composée de polystyrène expansible.

7. Composition expansible selon l'une quelconque des revendications 1 à 6, dans laquelle la concentration de HFO-1234ze est identique ou supérieure à la concentration de HCFO-1233zd dans la composition.

8. Composition expansible selon l'une quelconque des revendications 1 à 7, dans laquelle l'agent gonflant a un potentiel de réchauffement climatique (GWP) non supérieur à 1 000, de préférence non supérieur à 500 et mieux encore non supérieur à 150, non supérieur à 100 et mieux encore non supérieur à 75.

9. Composition expansible selon l'une quelconque des revendications 1 à 8, dans laquelle l'agent gonflant a un potentiel d'appauvrissement de la couche d'ozone (ODP) non supérieur à 0,05, de préférence non supérieur à 0,02 et mieux encore nul.

10. Composition expansible selon l'une quelconque des revendications 1 à 9, dans laquelle l'agent gonflant comprend en outre un ou plusieurs haloalcènes autres que le transHFO-1234ze et le transHCFO-1233zd, y compris le cisHFO-1234ze et le cisHCFO-1233zd ; des hydrocarbures ; des hydrofluorocarbures (HFC) ; des éthers ; des alcools ; des aldéhydes ; des cétones ; du formiate de méthyle ; de l'acide formique ; de l'eau ; du trans-1,2-dichloroéthylène ; du dioxyde de carbone et des combinaisons de deux ou plusieurs de ceux-ci, de préférence, l'agent gonflant comprenant en outre un ou plusieurs alcools, de préférence un ou plusieurs alcools en C1-C4, et mieux encore, du méthanol, de l'éthanol, du propanol et de l'isopropanol, au mieux de l'éthanol ; du HFC-152a ; de l'éther diméthylique ; de l'acétone ; un ou plusieurs hydrocarbures, de préférence des hydrocarbures en C1-C4 et mieux encore des hydrocarbures en C4, au mieux l'isobutène étant privilégié pour certains modes de réalisation ; du CO2 ; et de l'eau.

11. Mousse à cellules fermées obtenue à partir de la composition expansible selon l'une quelconque des revendications précédentes.

12. Mousse selon la revendication 11, la mousse étant une mousse de polystyrène extrudé.

13. Mousse selon la revendication 11 ou la revendication 12, la mousse ayant un facteur k (mW/m-K) non supérieur à 25, de préférence non supérieur à 23, mieux encore non supérieur à environ 20, lorsqu'il est mesuré à 4 °C (40 °F) 24 heures après la production, le facteur k étant mesuré selon la norme ASTM C518-10.

14. Mousse selon la revendication 13, la mousse ayant une densité non supérieure à 50 kg/m³, de préférence non supérieure à 45 kg/m³, mieux encore non supérieure à 40 kg/m³.
